# EUROPEAN PATENT APPLICATION

(11) **EP 3 070 596 A1**
(43) Date of publication of application: **21.09.2016**
(21) Application number: 16160462.4
(22) Date of filing: 15.03.2016
(51) Int. Cl.: G06F 3/12

(54) **DATA PROCESSING APPARATUS, OUTPUT SYSTEM AND METHOD OF OUTPUTTING**

(30) Priority: 20.03.2015 JP 2015057335
(71) Applicant: Ricoh Company, Ltd., Tokyo 143-8555 (JP)
(72) Inventor: MATSUURA, Kiichi, Tokyo, 143-8555 (JP)
(74) Representative: Schwabe - Sandmair - Marx

(57) **Abstract**

A data processing apparatus includes a receiving unit that receives a request of outputting in which a target user for outputting is designated; and an output destination distributing unit that selects an output apparatus specified by an object for which the target user for outputting is being logged in when the receiving unit receives the request of outputting, as an output destination of the request of outputting.

## Description

### BACKGROUND OF THE INVENTION

### 1. Field of the Invention

The present invention relates to a data processing apparatus, an output system and a method of outputting.

### 2. Description of the Related Art

Conventionally, an output system is known in which a previously set condition (a correspondence between a PC and a print device or the like) is stored in a table and printing is performed in accordance with the condition set in the table.

For example, an image forming apparatus is conventionally known that includes a data receiving unit that receives print data to be printed by an image forming apparatus, a characteristic extracting unit that analyzes the received print data and extracts a characteristic included in the print data, a selecting unit that selects an image forming apparatus to print the print data in accordance with the extracted characteristic, and a data sending unit that sends the print data to the selected image forming apparatus (see Patent Document 1, for example).

However, there is a possibility that usability is reduced by the output system in which printing is performed by the print device in accordance with the condition set in the table because the condition is fixed. For example, for an output system in which a user ID and a print device are corresponded in a table as static parameters, and printing is performed by a print device selected in accordance with the table, even when a user who should obtain a printed object is far from the previously set print device, the printed object is printed from the previously set print device. Thus, the user has to go to the previously set print device for fetching the printed object. For example, if the user is always working at the same place (room) and the previously set print device is also provided at that place, the user may not feel inconvenience. However, if the user works at another room and another print device is provided in that room, for example, it may be desirable for the user that the printed object is printed by the other print device.

As such, the conventional output system has a problem that it cannot flexibly satisfy a request of printing print data from a print device near a user.

Such a problem exists not only for an output system that performs printing, but also exists for an output system that performs projection or displaying.

### [Patent Document]

[Patent Document 1] Japanese Laid-open Patent Publication No. 2004-174718

### SUMMARY OF THE INVENTION

The present invention is made in light of the above problems, and provides a data processing apparatus capable of flexibly outputting from an output apparatus near a user.

According to an embodiment, there is provided a data processing apparatus including a receiving unit that receives a request of outputting in which a target user for outputting is designated; and an output destination distributing unit that selects an output apparatus specified by an object for which the target user for outputting is being logged in when the receiving unit receives the request of outputting, as an output destination of the request of outputting.

### BRIEF DESCRIPTION OF THE DRAWINGS

Other objects, features and advantages of the present invention will become more apparent from the following detailed description when read in conjunction with the accompanying drawings.
Fig. 1 is a view illustrating an example of a structure of a print system of an embodiment;
Fig. 2 is a view illustrating an example of a hardware structure of a computer of the embodiment;
Fig. 3 is a view illustrating an example of a hardware structure of an output apparatus of the embodiment;
Fig. 4 is a process block diagram illustrating an example of a client terminal of the embodiment;
Fig. 5 is a process block diagram illustrating an example of an authentication server apparatus of the embodiment;
Fig. 6 is a view illustrating an example of a structure of authentication status data;
Fig. 7 is a flowchart illustrating an example of a process of distributing print data to an output destination;
Fig. 8 is a view illustrating an example of a structure of data in which a room ID and an output apparatus ID of an output apparatus at a room specified by the room ID are corresponded;
Fig. 9 is an image view illustrating an example of a confirmation screen;
Fig. 10 is a view illustrating another example of a structure of the print system of the embodiment;
Fig. 11 is a process block diagram illustrating an example of a print server apparatus;
Fig. 12 is a flowchart illustrating another example of a process of distributing print data to an output destination; and
Fig. 13 is a view illustrating an example of a structure of a print job stored in a print job storing unit.

### DETAILED DESCRIPTION OF THE PREFERRED EMBODIMENTS

The invention will be described herein with reference to illustrative embodiments. Those skilled in the art will recognize that many alternative embodiments can be accomplished using the teachings of the present invention and that the invention is not limited to the embodiments illustrated for explanatory purposes.

It is to be noted that, in the explanation of the drawings, the same components are given the same reference numerals, and explanations are not repeated.

Although a print system is exemplified as an output system in this embodiment, the output system is not limited to the print system. The output system may be a system that performs outputting such as printing, projection, displaying or the like.

### (First embodiment)

### (System structure)

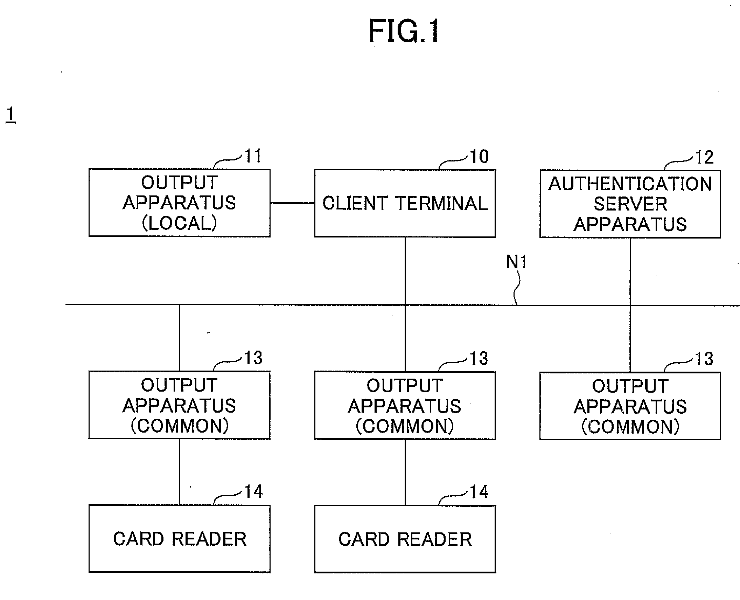

Fig. 1 is a view illustrating an example of a structure of a print system 1 of the embodiment. The print system 1 of Fig. 1 includes a client terminal 10, an authentication server apparatus 12, and common output apparatuses 13 which are connected via a network N1 such as a LAN or the like. The print system 1 further includes a local output apparatus 11 connected to the client terminal 10. The print system 1 further includes card readers 14 respectively connected to the common output apparatuses 13. Some of the common output apparatuses 13 may not be connected to the card reader 14.

Each of the client terminals 10, the local output apparatus 11, the authentication server apparatus 12, the common output apparatuses 13 and the card readers 14 has wireless or wired communication means. The number of each of the client terminals 10, the local output apparatus 11, the authentication server apparatus 12, the common output apparatuses 13 and the card readers 14 of the print system 1 of Fig. 1 is just an example and the number may be arbitrarily set.

The client terminal 10 is a data processing apparatus such as a PC or the like used by a user. The client terminal 10 is actualized by a terminal device such as a smartphone, a mobile phone, a PC or the like. The output apparatus 11 is an image forming apparatus or the like such as a printer or the like directly connected to the client terminal 10 via a wired or a wireless communication.

The authentication server apparatus 12 is actualized by one or more data processing apparatuses. The authentication server apparatus 12 stores user data, and authenticates a user based on a request from the output apparatus 13 or the like. The output apparatus 13 is an image forming apparatus or the like such as a printer or the like connected to the client terminal 10 via the network N1.

Each of the output apparatuses 11 and 13 may be an image forming apparatus such as a printer, a copying machine, a multifunction peripheral, a laser printer or the like, a projection apparatus or a display apparatus that outputs a display such as a projector, a monitor or the like, an audio output apparatus that outputs audio data such as audio or the like.

The card reader 14 is an example of a device that obtains user data used for user authentication from an IC card such as a staff ID card or the like. The card reader 14 may be one that uses a short range radio communication such as Bluetooth (registered trademark), Near Field Communication (NFC) or the like. The print system 1 of Fig. 1 is just an example.

### (Hardware structure)

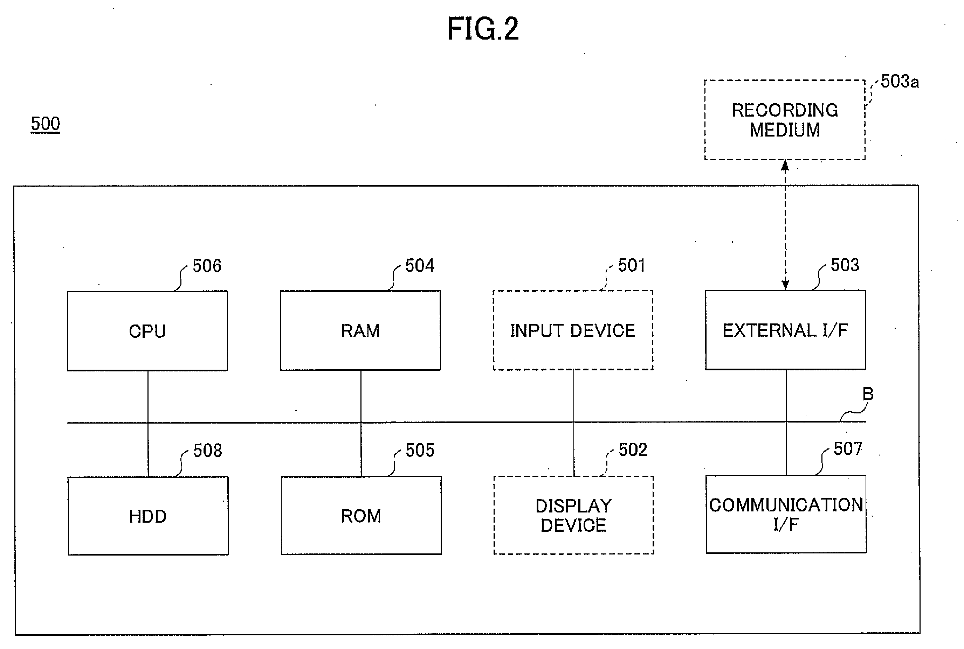

Each of the client terminals 10 and the authentication server apparatus 12 of Fig. 1 is actualized by a computer having a hardware structure as illustrated in Fig. 2, for example. Fig. 2 is a view illustrating an example of a hardware structure of a computer 500 of the embodiment.

The computer 500 illustrated in Fig. 2 includes an input device 501, a display device 502, an external I/F 503, a RAM 504, a ROM 505, a CPU 506, a communication I/F 507, a HDD 508 and the like which are connected with each other by a bus B. The input device 501 and the display device 502 may be connected only when it is necessary.

The input device 501 includes a keyboard, a mouse, a touch panel or the like, and is used by a user to input various operation signals. The display device 502 includes a display or the like and displays a processed result by the computer 500.

The communication I/F 507 is an interface that connects the computer 500 to the network N1. With this configuration, the computer 500 can perform data communication via the communication I/F 507.

The HDD 508 is an example of a non-volatile storage device that stores programs or data. The programs or data stored in the HDD 508 include an OS that is basic software for controlling the entirety of the computer 500, application software (hereinafter, simply referred to as "application" as well) that provides various functions on the OS or the like, for example. The computer 500 may include a drive device that uses a flash memory as a recording medium (a Solid State Drive (SSD), for example) instead of the HDD 508.

The external I/F 503 is an interface for an external device. As the external device, a recording medium 503a or the like may be used. With this configuration, the computer 500 can read and/or write data from and on the recording medium 503a via the external I/F 503. As the recording medium 503a, a flexible disk, a Compact Disk (CD), a Digital Versatile Disk (DVD), an SD Memory card, a Universal Serial Bus memory (USB memory) or the like may be used.

The ROM 505 is an example of a non-volatile semiconductor memory (storage device) that can store programs and data even when the power switch is turned off. The ROM 505 stores programs and data such as a Basic Input/Output System (BIOS) that is executed when activating the computer 500, an OS setting, a network setting or the like. The RAM 504 is an example of a volatile semiconductor memory (storage device) that temporarily stores programs and data.

The CPU 506 is an arithmetic unit that actualizes control and functions of the entirety of the computer 500 by reading out programs or data from the storage device such as the ROM 505, the HDD 508 or the like on the RAM 504 and executing the processes. The client terminal 10 and the authentication server apparatus 12 of the embodiment are capable of actualizing various processes, which will be explained later, by the above described hardware structure of the computer 500.

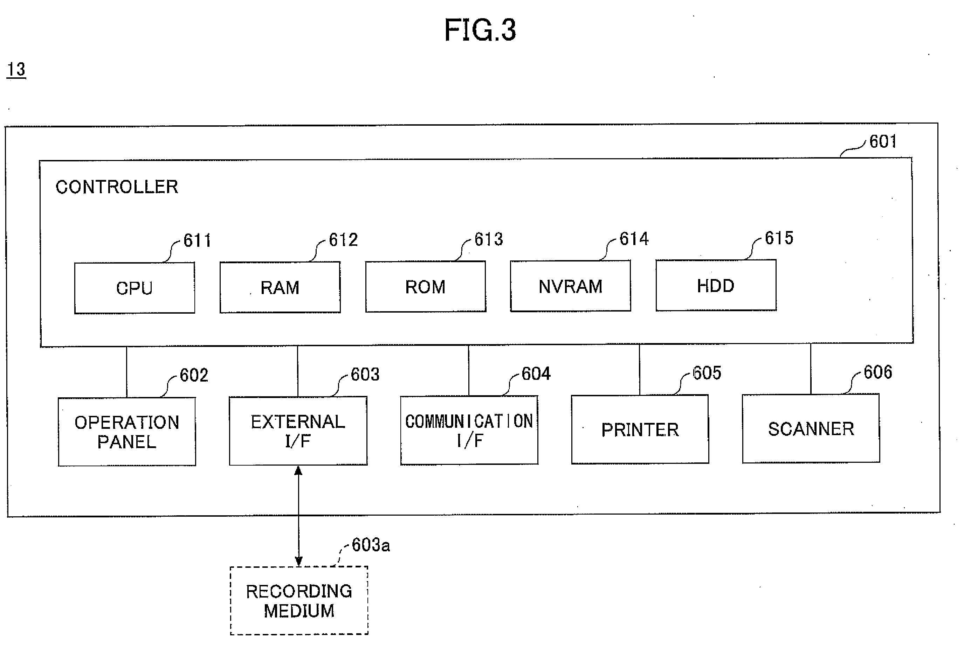

Each of the output apparatuses 11 and 13 of Fig. 1 is actualized by a hardware structure as illustrated in Fig. 3, for example. Here, the output apparatus 13 is exemplified. Fig. 3 is a view illustrating an example of a hardware structure of the output apparatus 13. The output apparatus 13 includes a controller 601, an operation panel 602, an external I/F 603, a communication I/F 604, a printer 605, a scanner 606 and the like.

The controller 601 includes a CPU 611, a RAM 612, a ROM 613, an NVRAM 614, a HDD 615 and the like. The ROM 613 stores various programs and data. The RAM 612 temporarily stores various programs and data. The NVRAM 614 stores setting data or the like, for example. The HDD 615 stores various programs and data.

The CPU 611 is an arithmetic unit that actualizes control and functions of the entirety of the output apparatus 13 by reading out programs, data, setting data or the like from the storage device such as the ROM 613, the NVRAM 614, the HDD 615 or the like on the RAM 612 and executing the processes.

The operation panel 602 includes an input unit that receives an input from a user and a display unit that displays data. The external I/F 603 is an interface for an external device. As the external device, a recording medium 603a or the like may be used. With this configuration, the output apparatus 13 can read and/or write data from and on the recording medium 603a via the external I/F 603. As the recording medium 603a, an IC card, a flexible disk, a CD, a DVD, an SD Memory card, a USB memory or the like may be used.

The communication I/F 604 is an interface that connects the output apparatus 13 to the network N1 or the card reader 14. With this configuration, the output apparatus 13 can perform data communication with the client terminal 10, the authentication server apparatus 12 or the like that is connected to the network N1 via the communication I/F 604. Further, the output apparatus 13 can perform data communication with the card reader 14 via the communication I/F 604.

The printer 605 is a printing device for printing print data on a paper. The scanner 606 is a reading device for reading image data (electronic data) from a document.

### (Software structure)

### (Client terminal)

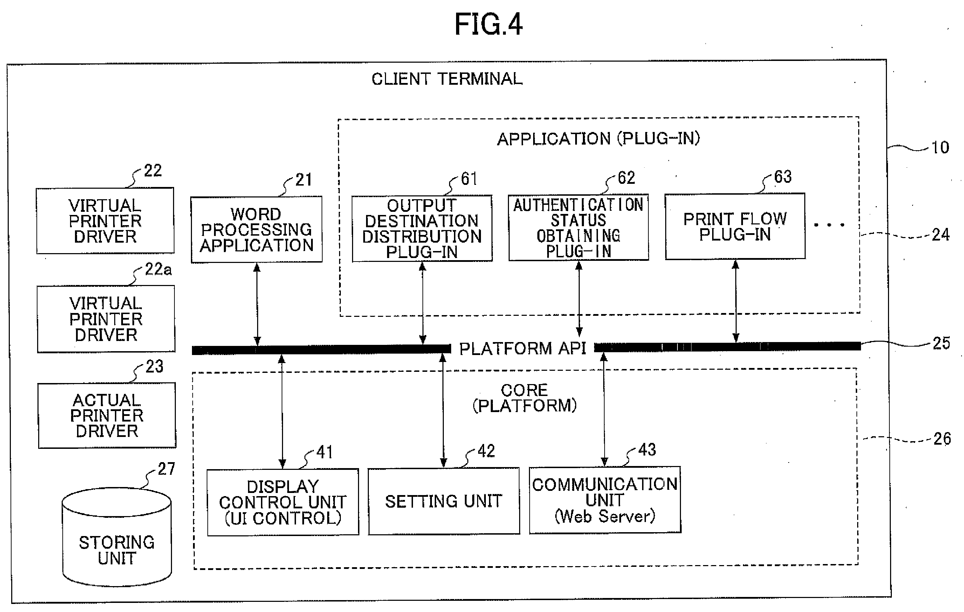

The client terminal 10 of the embodiment is actualized by a process block illustrated in Fig. 4, for example. Fig. 4 is a process block diagram illustrating an example of the client terminal 10 of the embodiment.

The client terminal 10 illustrated in Fig. 4 actualizes a word processing application 21, a virtual printer driver 22, a virtual printer driver 22a, an actual printer driver 23, a plug-in 24, a platform API 25, a platform 26 and a storing unit 27 by executing a program.

The plug-in 24 includes an output destination distribution plug-in 61, an authentication status obtaining plug-in 62 and a print flow plug-in 63. The platform 26 includes a display control (UI control) unit 41, a setting unit 42 and a communication unit 43.

The word processing application 21 is an example of an application that receives a request of printing from a user. The word processing application 21 is just an example, and alternatively, an application that receives a request of outputting such as printing or the like from a user may be used.

The virtual printer driver 22 is a printer driver that converts application data to platform-independent intermediate print data and outputs it. The intermediate print data is print data that does not depend on the kinds of the output apparatus 11 or the output apparatus 13.

Data of an XPS (XML Paper Specification) format is an example of the intermediate print data. The application data is an example of data to output. The virtual printer driver 22a is an example of a virtual printer driver for using the output destination distribution plug-in 61, the authentication status obtaining plug-in 62 and the print flow plug-in 63. The virtual printer driver 22a converts application data to platform-independent intermediate print data and outputs it.

The actual printer driver 23 converts the intermediate print data to actual print data that is in a format capable being printed by the output apparatus 11 or the output apparatus 13 and outputs it. Data in a RAW format is an example of the actual print data.

The plug-in 24 is software that is operated on the platform 26. The plug-in 24 can use functions of the platform 26 by using the platform API 25.

The platform API 25 is an interface for the plug-in 24 to use the functions of the platform 26. The platform API 25 is a previously defined interface provided for the platform 26 to receive a request from the plug-in 24, and is configured by a function, a class or the like, for example.

The display control unit 41 of the platform 26 controls display by the display device 502 based on a request from the word processing application 21, the plug-in 24 or the like, for example. The setting unit 42 performs setting of the plug-in 24. The communication unit 43 performs communication with external devices. The storing unit 27 stores settings or the like.

The client terminal 10 aggregates processes by aggregating functions that are commonly used by the plug-in 24 to the platform 26. Here, the classification of the process block diagram of Fig. 4 is just an example and it is not essential to classify the components into levels illustrated in Fig. 4.

As will be explained later, the output destination distribution plug-in 61 distributes a print job of the intermediate print data generated by the virtual printer driver 22a to one of the output apparatuses 11 and 13 as an output destination. The authentication status obtaining plug-in 62 obtains authentication status data, which will be explained later, from the authentication server apparatus 12.

The print flow plug-in 63 controls a print flow. For example, the print flow plug-in 63 controls outputting of actual print data from the output apparatus 11 or 13 using the actual printer driver 23.

The plug-in 24 may be arbitrarily installed by a user or an administrator so that the structure is not limited to that illustrated in Fig. 4.

### (Authentication server apparatus)

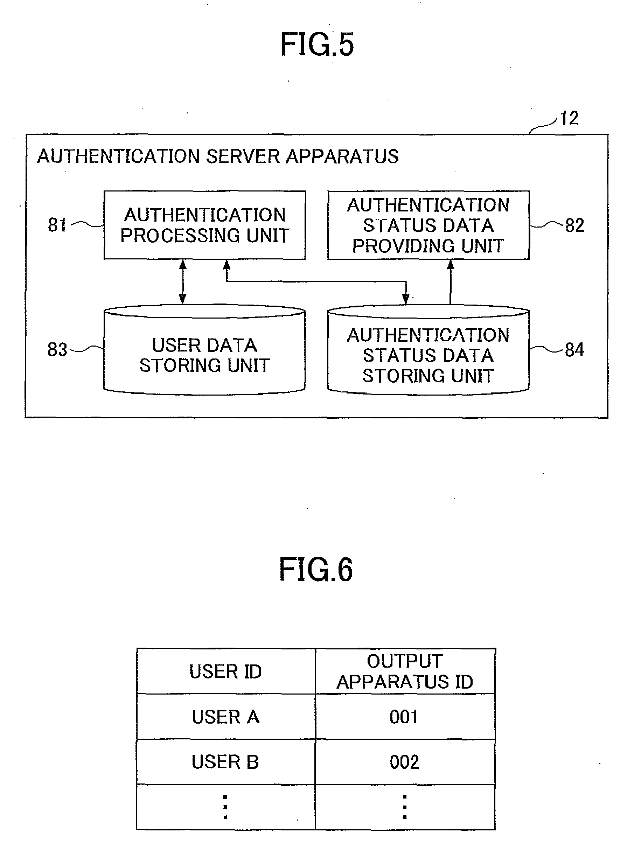

The authentication server apparatus 12 of the embodiment is actualized by a process block illustrated in Fig. 5, for example. Fig. 5 is an example of a process block diagram of the authentication server apparatus 12 of the embodiment. The authentication server apparatus 12 of Fig. 5 actualizes an authentication processing unit 81, an authentication status data providing unit 82, a user data storing unit 83 and an authentication status data storing unit 84 by executing a program.

The user data storing unit 83 stores user data used for user authentication. The authentication processing unit 81 receives a request of authentication from the common output apparatus 13 or the like, and performs authentication using the user data stored in the user data storing unit 83. The authentication processing unit 81 returns an authentication result to the requested output apparatus 13 or the like.

When the authentication is successfully performed, the authentication processing unit 81 stores authentication status data in which an output apparatus ID that uniquely identifies the output apparatus 13 from which the authentication is requested and a user ID that uniquely identifies the user for which the authentication is successfully performed are corresponded in the authentication status data storing unit 84. The output apparatus ID is an example of the output apparatus identification data that uniquely identifies the output apparatus 13 from which the authentication is requested. Further, the user ID is an example of user identification data that uniquely identifies the user for which the authentication is successfully performed.

As will be explained later, the authentication status data providing unit 82 receives an inquiry of the authentication status data of a target user for outputting from the client terminal 10, and provides the authentication status data to the client terminal 10 when the authentication status data of the target user for outputting is stored in the authentication status data storing unit 84. Here, the "target user for outputting" means a user for which an outputting is performed and the user who is supposed to fetch an output object.

The authentication status data storing unit 84 stores authentication status data as illustrated in Fig. 6, for example. Fig. 6 is a view illustrating an example of a structure of the authentication status data. The authentication status data of Fig. 6 is data in which the user ID of the user for which the authentication is successfully performed and the output apparatus ID of the output apparatus 13 for which the user is being logged in are corresponded. Here, the authentication status data of Fig. 6 indicates the output apparatus 13 for which the user is being logged in and also indicates a position (current place) of the target user for outputting.

Further, when a user logs out, the authentication processing unit 81 deletes the authentication status data of the user who is logged out, from the authentication status data storing unit 84. Further, when the user whose authentication status data is already stored in the authentication status data storing unit 84 is successfully authenticated from the output apparatus 13 other than the output apparatus 13 whose output apparatus ID is included in the authentication status data, the authentication processing unit 81 updates the authentication status data to include the output apparatus ID of the output apparatus 13 from which the user is newly authenticated.

### (Detailed process)

In the following, a process of the print system 1 of the embodiment is explained in detail.

### (Distribution of print data to output destination)

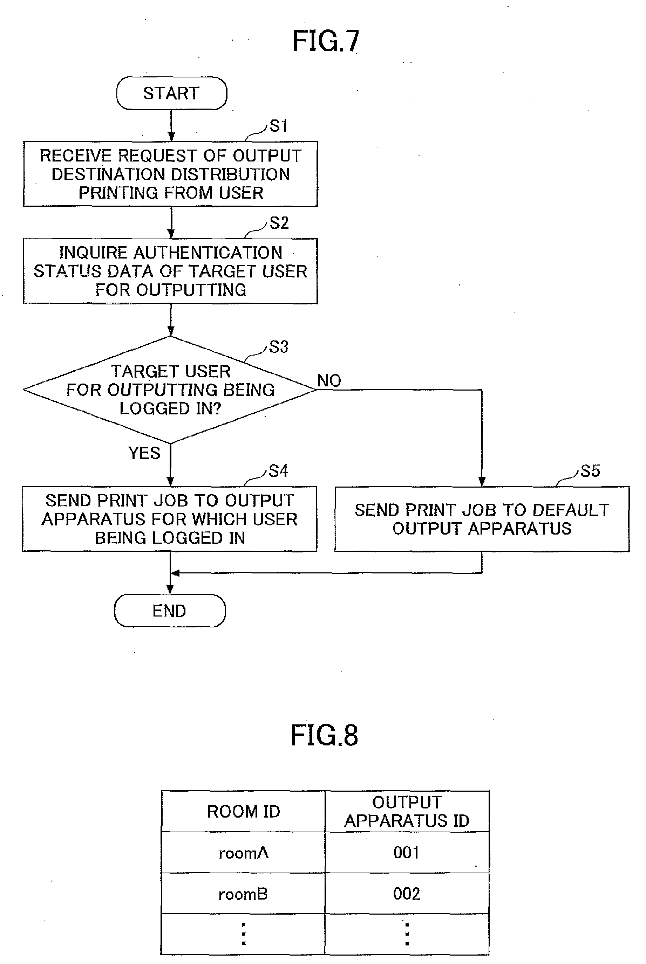

The client terminal 10 of the embodiment distributes print data to an output destination according to steps illustrated in Fig. 7, for example. Fig. 7 is a flowchart illustrating an example of a process of distributing print data to an output destination.

For example, the word processing application 21 receives a request of printing from a user. When a virtual printer driver other than the virtual printer driver 22a such as the virtual printer driver 22 or the like is selected, the word processing application 21 can start a print process in accordance with the printer driver 22 selected by the user by notifying a print event to the selected printer driver 22.

On the other hand, when the virtual printer driver 22a is selected, the word processing application 21 sends the print event to the virtual printer driver 22a. The virtual printer driver 22a sends the print event to the output destination distribution plug-in 61.

In step S1, the output destination distribution plug-in 61 receives a request of output destination distribution printing from a user in which a target user for outputting is designated. The target user for outputting and the user who requests the output destination distribution printing may be the same or may not be the same. Here, an example is described in which the target user for outputting and the user who requests the output destination distribution printing are not the same.

In step S2, the authentication status obtaining plug-in 62 inquires the authentication server apparatus 12 for the authentication status data of the target user for outputting. When the authentication status data of the target user for outputting is stored in the authentication status data storing unit 84, the authentication status data providing unit 82 of the authentication server apparatus 12 provides the authentication status data to the client terminal 10.

Here, as described above, the authentication status data is data in which the user ID of the user who is successfully authenticated, and the output apparatus ID of the output apparatus 13 for which the user is successfully logged in are corresponded. Thus, when the target user for outputting is being logged in any one of the output apparatuses 13, the authentication status obtaining plug-in 62 obtains the authentication status data from the authentication server apparatus 12.

In step S3, when the authentication status data is obtained from the authentication server apparatus 12, in other words, when the target user for outputting is being logged in the output apparatus 13, the output destination distribution plug-in 61 of the client terminal 10 performs a process of step S4. In step S4, the output destination distribution plug-in 61 selects the output apparatus 13 whose output apparatus ID is included in the obtained authentication status data as an output destination. The print flow plug-in 63 sends the print data to the selected output apparatus 13 to cause the output apparatus 13 to output the print data.

The authentication status data obtained from the authentication server apparatus 12 indicates the output apparatus 13 for which the target user for outputting is being logged in. Thus, the print data can be output from the output apparatus 13 near the target user for outputting by the process of step S4.

On the other hand, when the authentication status data cannot be obtained from the authentication server apparatus 12 in step S3, in other words, when the target user for outputting is not being logged in any of the output apparatuses 13, the output destination distribution plug-in 61 of the client terminal 10 performs a process of step S5. In step S5, the output destination distribution plug-in 61 selects a default output apparatus 13 as the output destination. The default output apparatus 13 is a static setting previously set to be corresponded with the target user for outputting.

Specifically, the client terminal 10 stores an output rule setting (output setting data) in which a user ID (log in ID) of a user and a specific output apparatus ID of one of the output apparatuses 13 are corresponded. The client terminal 10 selects the output apparatus 13 as the output destination using the output rule setting. The output apparatus 13 provided at a place in which the user generally presents may be set as such a default output rule setting in accordance with a division or a room to which the user belongs, for example.

The print flow plug-in 63 sends the print data to the output apparatus 13 selected as the output destination to output the print data. Thus, as described above, the authentication status data indicates the output apparatus 13 for which the user is being logged in. Thus, when the process of step S5 is performed, it means that the target user for outputting does not log in any of the output apparatuses 13, in other words, the position of the target user for outputting is not specified. Therefore, the print data is output from the default output apparatus 13 of the target user for outputting.

For example, a use case as will be described below can be considered for the print system 1 of the embodiment. For example, a case may be considered in which a first user (a nurse or the like) who operates the client terminal 10 requests an output destination distribution printing by designating another second user (a doctor or the like) as the target user for outputting. In such a case, if the second user is logged in any one of the output apparatuses 13, the client terminal 10 sends the print data to the output apparatus 13 for which the second user (the target user for outputting) is being logged in to output the print data.

Thus, according to the print system 1 of the embodiment, it is possible to output the print data from the output apparatus 13 near the target user for outputting.

Further, if the second user is not being logged in any of the output apparatuses 13, the client terminal 10 sends the print data to the default (static) output apparatus 13 of the target user for outputting to output the print data.

Thus, the print system 1 of the embodiment is capable of flexibly corresponding to perform outputting by the static setting of the target user for outputting and outputting by the place at which the target user for outputting is transferred (presents).

Further, when the target user for outputting and the user who requests the output destination distribution printing are the same, a use case as will be described below can be considered. For example, a user (a doctor or the like) who operates the client terminal 10 requests an output destination distribution printing by designating the user itself as the target user for outputting. If the user is being logged in any one of the output apparatuses 13, the client terminal 10 sends the print data to the output apparatus 13 for which the user is being logged in to output the print data.

Thus, according to the print system 1 of the embodiment, by requesting output destination distribution printing by designating the virtual printer driver 22a from the client terminal 10 after being logged in one of the output apparatuses 13, the user can output the print data from the output apparatus 13 for which the user is being logged in.

Further, when the user is not being logged in any of the output apparatuses 13, the client terminal 10 is configured to send the print data to the default (static) output apparatus 13 of the user to output the print data.

Thus, even when the target user for outputting and the user who requests the output destination distribution printing are the same, the print system 1 of the embodiment is capable of flexibly corresponding to perform outputting by the static setting of the target user for outputting and outputting by the place at which the target user for outputting is transferred (presents).

The authentication server apparatus 12 is further described in detail. In this embodiment, when the user logs in one of the output apparatuses 13, the user can obtain an output object (a printed paper, for example) from the respective output apparatus 13. As an operation method of the present system, an example as described below may be raised.

Generally, when a user is in their own room (room A), it is unnecessary for the user to log in the output apparatus 13 (output apparatus A) provided at the room A, however, if the user transfers to another room (room B), the user logs in the output apparatus 13 (output apparatus B) provided at the room B. In the print system 1, the user ID of the user and the output apparatus ID of the output apparatus 13 (output apparatus A) at the user's room (room A) are previously corresponded with each other.

Further, when the user further transfers to another room (room C) from the room B, the user may log in the output apparatus 13 (output apparatus C) at the room C. In accordance with the log in from the output apparatus 13 (output apparatus C), the authentication server apparatus 12 updates the authentication status data from a status that the user is corresponded as being logged in the output apparatus B to a status that the user is corresponded as being logged in the output apparatus C (the output apparatus ID corresponded with the user ID is rewritten by the output apparatus ID of the output apparatus C). Furthermore, it may be configured that the user is logged out from the output apparatus 13 (output apparatus B) at the room B before transferring to the room C.

In such an operation method, the authentication server apparatus 12 may have a function that inhibits concurrent login (multiple login) to the plurality of output apparatuses 13 by the one user ID of the one user, and a function that does not automatically log out. This means that there is a case that it is desirable that an automatic log out function by time out of a short period is not provided.

Furthermore, the authentication server apparatus 12 may have a function that allows concurrent login (multiple login) to one of the output apparatuses 13 by the plurality of users. The action of logging in the system of the embodiment does not necessarily mean to use the output apparatus 13 at the time of logging in, but may mean just to register the current place of the user. Thus, there may be a case, if the plurality of users are gathered in the same room, it is preferable that the plurality of users log in the output apparatus 13 at the room at the same time to have the output apparatus 13 output print job.

When applying the embodiment, the authentication server apparatus 12 may not necessarily have the above functions. However, when it is desirable to adapt a login method that is different from a conventional login method to the output apparatus 13, the authentication server apparatus 12 may be configured to have arbitrarily combined above described functions to perform a preferable operation (configuration of the print system 1). The conventional login method to the output apparatus 13 means a method in which it is desirable for a user to log in the output apparatus 13 when using the output apparatus 13 and to log out when the user does not use the output apparatus 13.

Here, an example is described in which the user ID of the user who is successfully authenticated in the authentication server apparatus 12 and the output apparatus ID of the requested output apparatus 13 are corresponded as the authentication status data in the print system 1, this is not limited so.

For example, the print system 1 of the embodiment may obtain entrance and exit data of each room of the user from an entrance and exit control system, and may correspond the output apparatus ID of the output apparatus 13 provided at the room in which the user enters with the user ID. In other words, when login and logout is controlled at an entrance of a room when a user enters and exits the room, the output apparatus 13 to output print data may be specified using an entrance and exit status for room.

The output apparatus ID of the output apparatus 13 provided at the room in which the user enters may be obtained by using data in which the room ID and the output apparatus ID of the output apparatus 13 provided at the room are corresponded as illustrated in Fig. 8, for example.

Fig. 8 is a view illustrating an example of a structure of data in which a room ID and an output apparatus ID of an output apparatus at a room specified by the room ID are corresponded. Here, although the room ID and the output apparatus ID are corresponded with each other as one to one in Fig. 8, a plurality of the output apparatus IDs may be corresponded with a single room ID.

In this case, as the room in which the user enters is at an entered status (login status), the print job is output from the output apparatus 13 of the output apparatus ID that is corresponded with the room ID of the room in which the user enters.

An object for which a user logs in may be arbitrarily selected from either of a room or the output apparatuses 13. According to the print system 1, as the authentication status data of Fig. 6, the login status data, the login target data and the output apparatus specifying data are stored in a storing unit (storing apparatus) in the print system 1 and controlled.

The login status data is data by which whether the user is being logged in can be determined, as the authentication status data of Fig. 6. The login target data is data for managing a login object (an output apparatus for the example of Fig. 6, and a room for the example of Fig. 8) for which the user logs in. The output apparatus specifying data is data for managing the output apparatus 13 (output apparatus of Fig. 6 and Fig. 8) specified by the login object.

Further, as can be understood from the above description, it is unnecessary to separately store the login status data, the login target data and the output apparatus specifying data, and may be stored (managed) together. Further, as the login object may be the output apparatus 13, the output apparatus ID may function as the identification data for specifying the login object and also the identification data for specifying the output apparatus 13. Thus, it is unnecessary to indicate different data when names of plurality of data are different. In this embodiment, entered status for room and exit status for room may be referred to as login status and logout status.

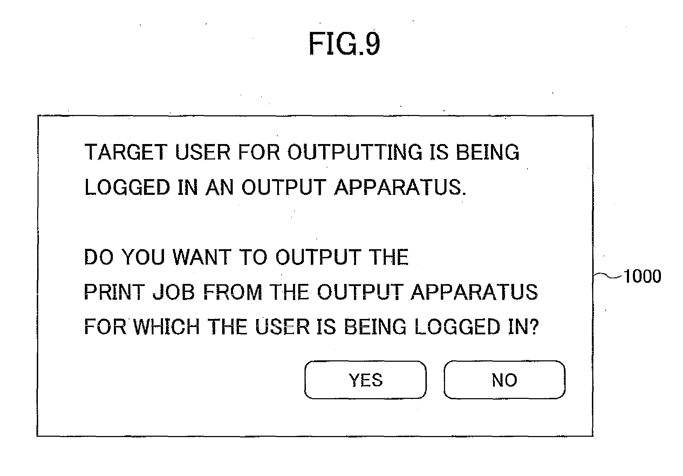

Further, according to the print system 1, when the target user for outputting is being logged in, a confirmation screen 1000 as illustrated in Fig. 9 may be displayed on the client terminal 10 and whether to output print data from the output apparatus 13 for which the user is being logged in or from the default output apparatus 13 may be selected by the user.

Fig. 9 is an image view illustrating an example of a confirmation screen 1000. The confirmation screen 1000 of Fig. 9 includes a message for a user to ask whether the user desires to output the print job from the output apparatus 13 for which the user is being logged in. The confirmation screen 1000 of Fig. 9 includes a "YES" button for selecting the output apparatus 13 for which the user is being logged in to output the print job, and a "NO" button for selecting the default output apparatus 13 to output the print job.

### (Second embodiment)

According to the first embodiment, the client terminal 10 performs the output destination distribution process. However, in the second embodiment, a print server apparatus performs the output destination distribution process. As the components of the second embodiment are the same except a part, the same explanations are not repeated.

### (System structure)

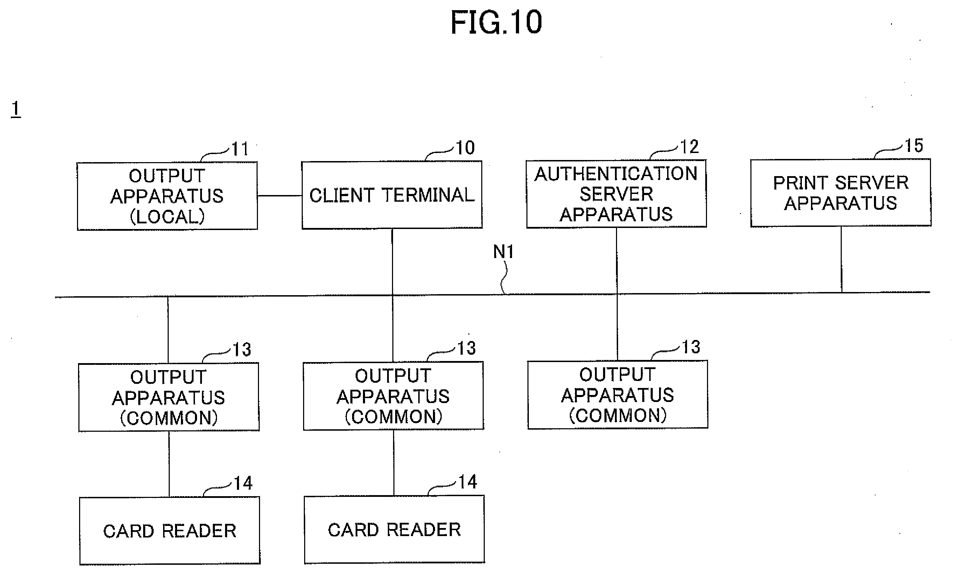

Fig. 10 is a view illustrating another example of a structure of the print system 1. The print system 1 of Fig. 10 has a structure in which a print server apparatus 15 is added to the structure of the print system 1 of Fig. 1. The print server apparatus 15 is actualized by one or more data processing apparatuses. The print server apparatus 15 stores print data or print job data. The print server apparatus 15 sends the print data or the print job data to the output apparatus 13 or the like based on a request from the output apparatus 13 or the like. Further, the print server apparatus 15 performs the processes that are performed by the output destination distribution plug-in 61 and the authentication status obtaining plug-in 62 of the client terminal 10 in the first embodiment.

The print server apparatus 15 stores output data such as the print data or the like, and output data related data such as the print job data or the like (bibliographic data of the print data or the like) related to the output data, and sends it to the output apparatus 13 or the like.

For example, when the output apparatus 13 is a projector, the print server apparatus 15 stores display data (output data) that is to be displayed (projected) by the projector. Further, the print server apparatus 15 may store a setting (output data related data) such as a displaying method or the like when displaying the display data. Further, the print server apparatus 15 may store both of print data and display data. The print server apparatus 15 send output data or output data related data in accordance with the output apparatus 13 among the plurality of output apparatuses 13 that output different output data such as a multifunction peripheral that prints print data, a projector that displays display data or the like. As such, the embodiments are applied not only to the print data or the print job data.

### (Software structure)

### (Print server apparatus)

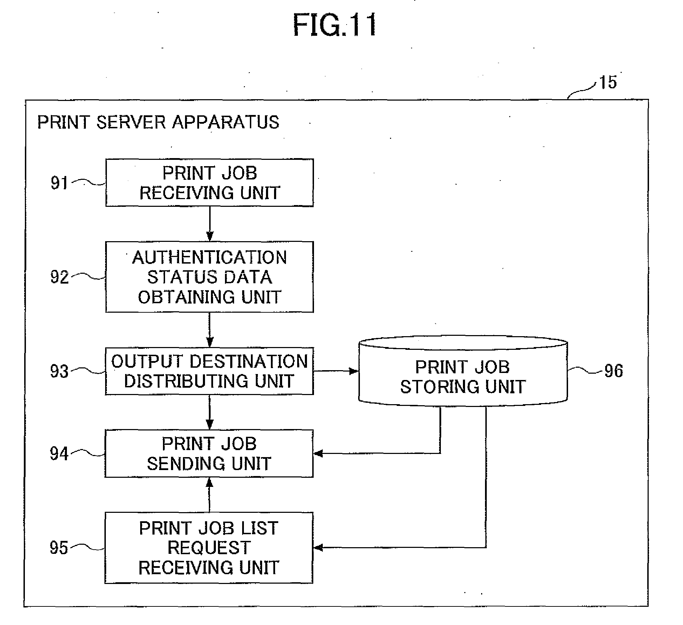

The print server apparatus 15 of the embodiment is actualized by a process block illustrated in Fig. 11, for example. Fig. 11 is a process block diagram illustrating an example of the print server apparatus 15 of the embodiment.

The print server apparatus 15 illustrated in Fig. 11 actualizes a print job receiving unit 91, an authentication status data obtaining unit 92, an output destination distributing unit 93, a print job sending unit 94, a print job list request receiving unit 95 and a print job storing unit 96 by executing a program.

The print job receiving unit 91 receives a print job from the client terminal 10. The authentication status data obtaining unit 92 obtains the authentication status data of the target user for outputting from the authentication server apparatus 12. The output destination distributing unit 93 distributes the print job received from the client terminal 10 to the output apparatus 13 selected based on the authentication status data of the target user for outputting as the output destination, or stores the print job in the print job storing unit 96. The print job storing unit 96 stores the print job.

The print job sending unit 94 sends the print job to the output apparatus 13 selected by the output destination distributing unit 93 as the output destination. Alternatively, the print job sending unit 94 receives a request of the print job stored in the print job storing unit 96 from an apparatus, and provides the print job to the requested apparatus.

Further, the print job list request receiving unit 95 receives a request of a list (print job list) of print jobs stored in the print job storing unit 96 from an apparatus, and provides the print job list to the requested apparatus.

### (Detailed process)

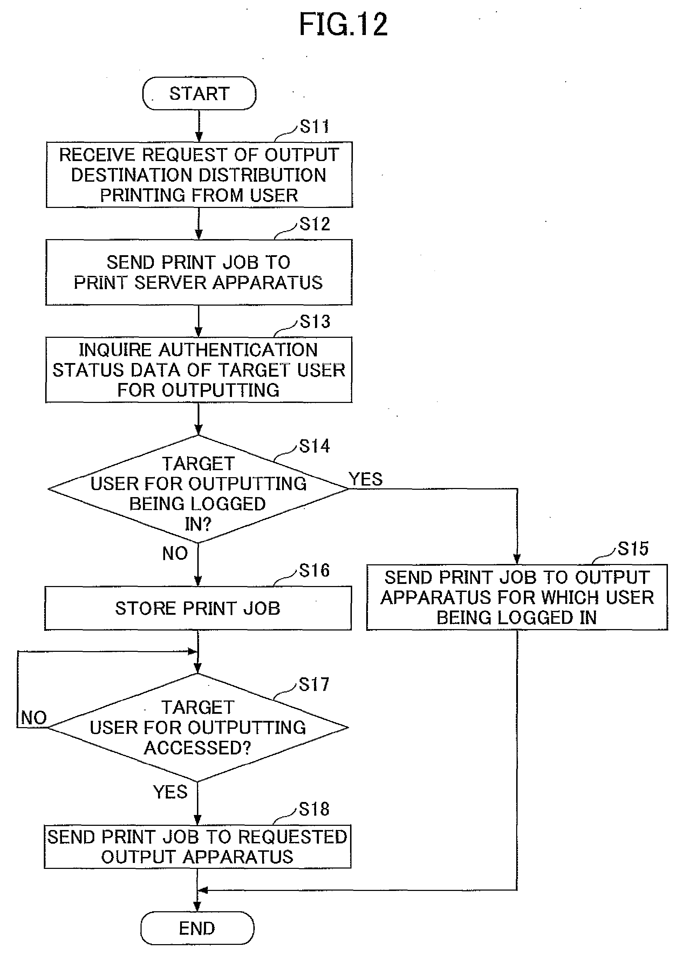

In the second embodiment, the print data is distributed to an output destination by steps illustrated in Fig. 12, for example. Fig. 12 is a flowchart illustrating another example of a process of distributing print data to an output destination.

For example, the word processing application 21 of the client terminal 10 receives a request of printing from a user in which the virtual printer driver 22a is selected. When the virtual printer driver 22a is selected, the word processing application 21 sends a print event to the selected virtual printer driver 22a. The virtual printer driver 22a sends an output destination distribution print event to the print flow plug-in 63.

In step S11, the print flow plug-in 63 receives a request of output destination distribution printing from a user in which a target user for outputting is designated. In step S12, the print flow plug-in 63 sends the request of output destination distribution printing and the print job corresponding to the request of output destination distribution printing to the print server apparatus 15.

In step S13, the print job receiving unit 91 of the print server apparatus 15 receives the print job corresponding to the request of output destination distribution printing. The authentication status data obtaining unit 92 inquires the authentication server apparatus 12 for the authentication status data of the target user for outputting. When the authentication status data of the target user for outputting is stored in the authentication status data storing unit 84, the authentication status data providing unit 82 of the authentication server apparatus 12 provides the authentication status data to the print server apparatus 15.

Here, as described above, the authentication status data is data in which the user ID of the user who is successfully authenticated, and the output apparatus ID of the output apparatus 13 for which the user is successfully logged in are corresponded. Thus, when the target user for outputting is being logged in the output apparatus 13, the authentication status data obtaining unit 92 obtains the authentication status data from the authentication server apparatus 12.

In step S 14, when the authentication status data is obtained from the authentication server apparatus 12, in other words, when the target user for outputting is being logged in any one of the output apparatuses 13, the output destination distributing unit 93 of the print server apparatus 15 performs a process of step S15. In step S15, the output destination distributing unit 93 selects the output apparatus 13 whose output apparatus ID is included in the obtained authentication status data as an output destination. The print job sending unit 94 sends the print job to the selected output apparatus 13 to cause the output apparatus 13 to output the print data.

The authentication status data obtained from the authentication server apparatus 12 indicates the output apparatus 13 for which the target user for outputting is being logged in. Thus, the print data can be output from the output apparatus 13 near the target user for outputting by the process of step S15.

In step S14, when the authentication status data print cannot be obtained from the authentication server apparatus 12, in other words, when the target user for outputting is not being logged in any of the output apparatuses 13, the output destination distributing unit 93 of the server apparatus 15 proceeds to a process of step S16.

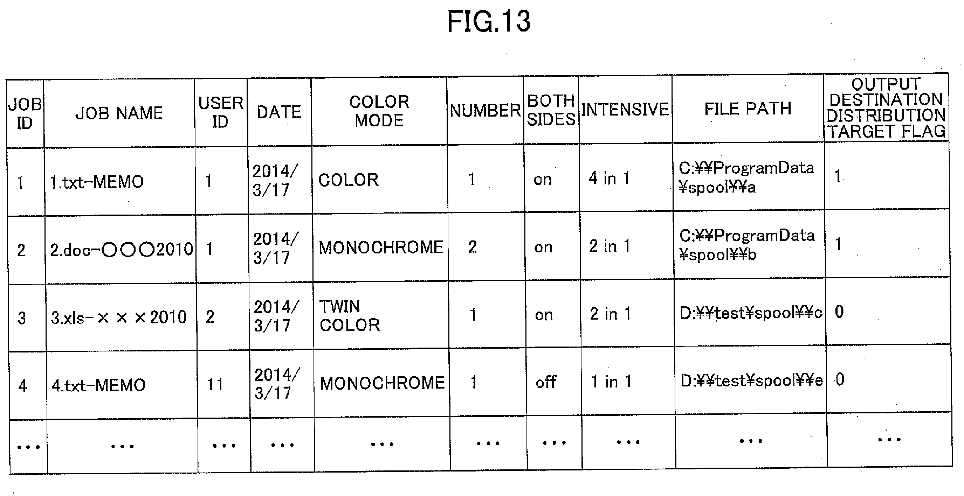

In step S16, the output destination distributing unit 93 stores the print job corresponding to the request of output destination distribution printing in the print job storing unit 96. Here, the print job storing unit 96 adds data for differentiating the print job corresponding to the request of output destination distribution printing from other print jobs as illustrated in Fig. 13, and stores data thereafter.

Fig. 13 is a view illustrating an example of a structure of print job data stored in the print job storing unit 96. An "output destination distribution target flag" is added to the print job data of Fig. 13 for differentiating the print job corresponding to the request of output destination distribution printing and other print jobs.

In step S17, the print job list request receiving unit 95 determines whether a request of a list (print job list) of the print jobs stored in the print job storing unit 96 is received from the target user for outputting. When the target user for outputting logs in a specific one of the output apparatuses 13, the request of the print job list is sent to the print server apparatus 15 from the specific output apparatus 13. The request of the print job list from the target user for outputting is an example of an access from the output apparatus 13 by the target user for outputting.

Upon receiving the request of the print job list from the target user for outputting, the print job sending unit 94 proceeds to step S18, and sends the print job corresponding to the request of output destination distribution printing to the requested output apparatus 13 to output. The requested output apparatus 13 is the output apparatus 13 for which the target user for outputting is being logged in. The print job sent here is the print job stored in step S16 and the print job sending unit 94 specifies the print job based on the "output destination distribution target flag".

Here, when outputting of the sent print job is completed, the print job list of the print jobs (other print jobs) of the user that are stored by processes other than step S16 is displayed, and the user requests outputting of the print job selected from the print job list to the output apparatus 13. Then, the output apparatus 13 obtains the print job selected by the user from the print server apparatus 15 and outputs it.

This means that different methods of controlling printing are performed for the print jobs differentiated by the output destination distribution target flag, respectively. The methods of controlling printing are not limited to above described ones and other methods may be adopted. For example, when displaying a print job list, the print job corresponding to the request of output destination distribution printing may be displayed by a color different from a color for the other print jobs or the like. In such a case, the print job corresponding to the request of output destination distribution printing is selected from the print job list based on the color and sent to the requested output apparatus 18 to output in step S18.

Thus, by a process of step S18, it is possible to output the print data from the output apparatus 13 near the target user for outputting. The print job of the second embodiment may include both the print job data and the print data, or by storing the print data in the client terminal 10 and the print job may include the print job data in which a stored place of the print data is indicated by a file path.

### (Other examples)

Although it is described that when the target user for outputting is not being logged in, the default output apparatus 13 is selected as the output destination output apparatus 13 in the first embodiment, in such a case, none of the output apparatuses 13 may be selected. Alternatively, in such a case, the client terminal 10 may notify the fact to the user who requests the printing.

Although it is described that the default output apparatus 13 is selected as the output destination when the target user for outputting is not being logged in any of the output apparatuses 13 in the first embodiment, in such a case, the print job may be stored in the print server apparatus 15. As described in the second embodiment, when being accessed from the target user for outputting, the print server apparatus 15 sends the print job corresponding to the request of output destination distribution printing to the requested (accessed) output apparatus 13 to output.

### (Summary)

According to the print system 1 of the embodiment, it is possible to flexibly output at a place where a target user for outputting is present.

According to the embodiment, a data processing apparatus capable of flexibly outputting from an output apparatus near a user is provided.

Although a preferred embodiment of the data processing apparatus, the output system and the method of outputting has been specifically illustrated and described, it is to be understood that minor modifications may be made therein without departing from the spirit and scope of the invention as defined by the claims.

The present invention is not limited to the specifically disclosed embodiments, and numerous variations and modifications may be made without departing from the spirit and scope of the present invention.

The print system 1 of the embodiment is an example of an output system. The client terminal 10 is an example of a data processing apparatus. The authentication server apparatus 12 is an example of an external apparatus. The print server apparatus 15 is an example of a storing apparatus. The output destination distribution plug-in 61 is an example of a receiving unit that receives a request of outputting in which a target user for outputting is designated.

The output destination distribution plug-in 61 is an example of an output destination distributing unit that selects an output apparatus specified by an object for which the target user for outputting is being logged in when the receiving unit receives the request of outputting, as an output destination of the request of outputting. The output destination distribution plug-in 61 is an example of a specifying unit that specifies an output apparatus based on an object for which the target user for outputting is being logged in when the receiving unit receives the request of outputting.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

## Claims

1. A data processing apparatus comprising:
a receiving unit that receives a request of outputting in which a target user for outputting is designated; and
an output destination distributing unit that selects an output apparatus specified by an object for which the target user for outputting is being logged in when the receiving unit receives the request of outputting, as an output destination of the request of outputting.

2. The data processing apparatus according to claim 1,
wherein the output destination distributing unit selects an output apparatus that is specified based on login status data that manages a login status of a user, login target data that manages a target for which the user is logged in, and output apparatus specifying data that manages an output apparatus specified by the target, as the output destination.

3. The data processing apparatus according to claim 2,
wherein the output destination distributing unit
sends a request of obtaining an output destination to perform a process of specifying an output destination from the target user for outputting designated in the request of outputting to an external apparatus that manages the login status data, the login target data and the output apparatus specifying data,
when the output apparatus is specified as the output destination in accordance with the request of obtaining the output destination, selects the specified output apparatus as the output destination of the request of outputting, and
when the output apparatus is not specified as the output destination in accordance with the request of obtaining the output destination, selects an output apparatus based on output setting data in which a default output apparatus is previously corresponded with the target user for outputting as the output destination of the request of outputting.

4. The data processing apparatus according to claim 3,
wherein when the output apparatus is specified as the output destination in accordance with the request of obtaining the output destination, the output destination distributing unit have a user who inputs the request of outputting determine whether to perform outputting by the specified output apparatus as the output destination.

5. The data processing apparatus according to one of claims 2 to 4,
wherein the target managed by the login target data is an output apparatus, and
wherein the login target data manages the output apparatus for which the user is logged in.

6. The data processing apparatus according to one of claims 2 to 4,
wherein the target managed by the login target data is a place entrance to which and exit from which is managed by an entrance and exit control system, and
wherein the login target data manages the place for which the user is logged in.

7. The data processing apparatus according to claim 3,
wherein the data processing apparatus is configured to be connected to a storing apparatus via a network, the storing apparatus including a storing unit that stores the request of outputting, and a sending unit that sends the request of outputting stored in the storing unit in response to a request from an output apparatus, and
wherein when the output apparatus is not specified as the output destination in accordance with the request of obtaining the output destination, the output destination distributing unit selects the storing apparatus as the output destination of the request of outputting.

8. An output system including
a data processing apparatus that receives a request of outputting in which a target user for outputting is designated, and
an output apparatus that performs outputting in accordance with the request of outputting,
the output system comprising:
a receiving unit that receives the request of outputting in which the target user for outputting is designated;
a specifying unit that specifies an output apparatus based on an object for which the target user for outputting is being logged in when the receiving unit receives the request of outputting; and
an output destination distributing unit that selects the output apparatus specified by the specifying unit as an output destination of the request of outputting.

9. A method of outputting performed in an output system including
a data processing apparatus that receives a request of outputting in which a target user for outputting is designated, and
an output apparatus that performs outputting in accordance with the request of outputting,
the method of outputting comprising:
a receiving step of receiving the request of outputting in which the target user for outputting is designated;
a specifying step of specifying an output apparatus based on an object for which the request of outputting is being logged in when the request is received in the receiving step; and
an output destination distribution step of selecting the output apparatus specified in the specifying step as an output destination of the request of outputting.
